# EUROPÄISCHE PATENTSCHRIFT

(11) **EP 0 683 583 B1**
(45) Veröffentlichungstag und Bekanntmachung des Hinweises auf die Patenterteilung: **13.02.2002**
(21) Anmeldenummer: 95106943.4
(22) Anmeldetag: 08.05.1995
(51) Int. Cl.: H04L 12/56, H04B 1/74

(54) **Verfahren und Schaltungsanordnung zum störungsfreien Umleiten eines Nachrichtenzellenstromes auf einen Ersatzweg**
Method and circuit for fault-free rerouting of a cell information flow through an alternate path
Procédé et circuit pour réacheminer sans erreurs le flux de cellules d'information à travers une voie alternative

(30) Priorität: 11.05.1994 DE 4416719
(43) Veröffentlichungstag der Anmeldung: 22.11.1995
(73) Patentinhaber: SIEMENS AKTIENGESELLSCHAFT, 80333 München (DE)
(72) Erfinder: Edmaier, Bernhard, Dipl. Ing., D-82229 Seefeld (DE); Fischer, Wolfgang, Dr. Ing., D-82110 Germering (DE)

(56) Entgegenhaltungen:
- EP-A- 0 645 919
- US-A- 5 440 565
- INTERNATIONAL CONFERENCE IN COMMUNICATIONS, 1.Mai 1994, USA, Seiten 1341-1345, XP000438716 C. LI ET AL.: "Implementation and performance analysis of congestion-tolerant isochronous communication in ATM networks using diversified routing"
- INTERNATIONAL CONFERENCE ON COMMUNICATIONS, Bd. 1, Mai 1993, Seiten 272-276, XP000371105 H. OHTA ET AL.: "Hitless line protection switching method for ATM networks"

## Beschreibung

Die Erfindung betrifft ein Verfahren und eine Schaltungsanordnung zum Umleiten eines Nachrichtenzellenstromes von einem aktiven Weg auf einen Ersatzweg innerhalb eines zellenorientierten Kommunikationsnetzes.

Ein derartiges Verfahren und eine derartige Schaltungsanordnung sind bereits aus Ohta, H., Ueda, H.: "Hitless Line Protection Switching Method for ATM Networks", IEEE International Conference on Communications ICC '93, Seiten 272 bis 276, bekannt. Bei diesem bekannten Verfahren bzw. bei dieser bekannten Schaltungsanordnung ist am Ausgang einer am Anfang eines Leitungspaares liegenden Koppeleinrichtung sowie am Eingang einer am Ende des betreffenden Leitungspaares liegenden Koppeleinrichtung jeweils eine gesonderte Steuereinrichtung vorgesehen. Durch die an dem betreffenden Ausgang liegende Steuereinrichtung wird dabei ein zu übertragender Nachrichtenzellenstrom dupliziert, um über das Leitungspaar zwei identische Nachrichtenzellenströme zu der am Ende des Leitungspaares vorgesehenen Steuereinrichtung hin zu übertragen. Durch letztere erfolgt eine Synchronisierung der beiden zugeführten Nachrichtenzellenströme sowie eine Weiterleitung des über die als Ersatzleitung festgelegte Leitung des Leitungspaares übertragenen Nachrichtenzellenstromes nach erfolgter Synchronisierung. Für diese sind drei unterschiedliche Verfahren beschrieben. Bei zwei dieser Verfahren werden spezielle Steuer-Zellen verwendet, während das verbleibende Verfahren auf einen bitweisen Vergleich der über das Leitungspaar übertragenen Nachrichtenzellen hinausläuft.

Bei dem bekannten Verfahren bzw. bei der bekannten Schaltungsanordnung ist lediglich eine unterbrechungsfreie Ersatzschaltung der gesamten Leitungs-Kapazität zwischen den beiden zu dem Leitungspaar gehörenden Leitungen möglich. Es können keine Teilkapazitäten, beispielsweise in Form einzelner virtueller Pfadverbindungen, zwischen den beiden Leitungen umgelenkt werden. Darüber hinaus ist pro Leitungspaar eine gesonderte ausgangsseitige dezentrale Steuereinrichtung erforderlich, so daß insbesondere für den Fall, daß zwischen miteinander verbundenen Koppeleinrichtungen eine Vielzahl von Leitungspaaren verläuft, ein hoher schaltungstechnischer Aufwand notwendig ist.

Aus der europäischen Patentanmeldung EP 0 645 919 A2, die Stand der Technik im Sinne von Art. 54 (3), (4) EPÜ bildet, wird ein Verfahren zum Übertragen von Nachrichtenzellen über redundante virtuelle Pfadpaare eines ATM-Kommunikationsnetzes vorgeschlagen. Auch bei diesem bekannten Verfahren bzw. bei dieser bekannten Schaltungsanordnung ist lediglich eine unterbrechungsfreie Ersatzschaltung der gesamten Leitungs-Kapazität zwischen den beiden zu dem Leitungspaar gehörenden Leitungen möglich. Es können keine Teilkapazitäten zwischen den beiden Leitungen umgelenkt werden.

Aus der Druckschrift Chung-Sheng, Li, Christos, Georgiou.: "Implementation and Performance Analysis of Congestion-Tolerant Isochronous Communication in ATM Networks using diversified Routing", International Conference on Communications, 1. Mai 1994, Seiten 1341 bis 1345, XP000438716 ist ein Verfahren und ein Kommunikationsnetz zum sicheren Übertragen von ATM Zellen bekannt. Auch hier ist ein hoher schaltungstechnischer Aufwand notwendig.

Es ist nun Aufgabe der vorliegenden Erfindung, einen Weg zu zeigen, wie innerhalb eines zellenorientierten Kommunikationsnetzes einzelne virtuelle Pfade bzw. virtuelle Verbindungen von einem aktiven Weg auf einen Ersatzweg umgeleitet werden können.

Gelöst wird diese Aufgabe durch die im Patentanspruch 1 angegebenen Verfahrensmerkmale. Die Erfindung bringt dabei den Vorteil mit sich, daß die Umleitung eines Nachrichtenzellenstromes mit Hilfe einer zentralen Synchronisiereinrichtung vorgenommen wird, die lediglich temporär dem jeweiligen virtuellen Pfad bzw. der jeweiligen virtuellen Verbindung zugewiesen wird. Ein weiterer Vorteil besteht darin, daß eine solche zentrale Synchronisiereinrichtung jederzeit nachrüstbar ist, ohne daß in den einzelnen Koppeleinrichtungen des ATM-Kommunikationsnetzes zusätzliche schaltungstechnische Maßnahmen erforderlich sind.

Weitere zweckmäßige Ausgestaltungen des Verfahrens gemäß der vorliegenden Erfindung ergeben sich aus den Patentansprüchen 2 bis 8.

Die vorstehend aufgezeigte Aufgabe wird bei einer Schaltungsanordnung durch die im Patentanspruch 9 angegebenen schaltungstechnischen Merkmale gelöst. Zweckmäßige Ausgestaltungen dieser Schaltungsanordnung ergeben sich aus den Patentansprüchen 9, 10 und 11.

Im folgenden wird die vorliegende Erfindung anhand von Zeichnungen beispielsweise näher erläutert.
- FIG 1: zeigt in einem Blockschaltbild ausschnittweise ein ATM-Kommunikationsnetz, bei welchem die vorliegende Erfindung angewandt ist,
- FIG 2: gibt das Zusammenwirken zweier Kommunikationseinrichtungen wieder, auf welches im folgenden näher eingegangen wird,
- FIG 3: zeigt ausschnittweise einen möglichen Aufbau einer in FIG 1 lediglich schematisch dargestellten zentralen Synchronisiereinrichtung.

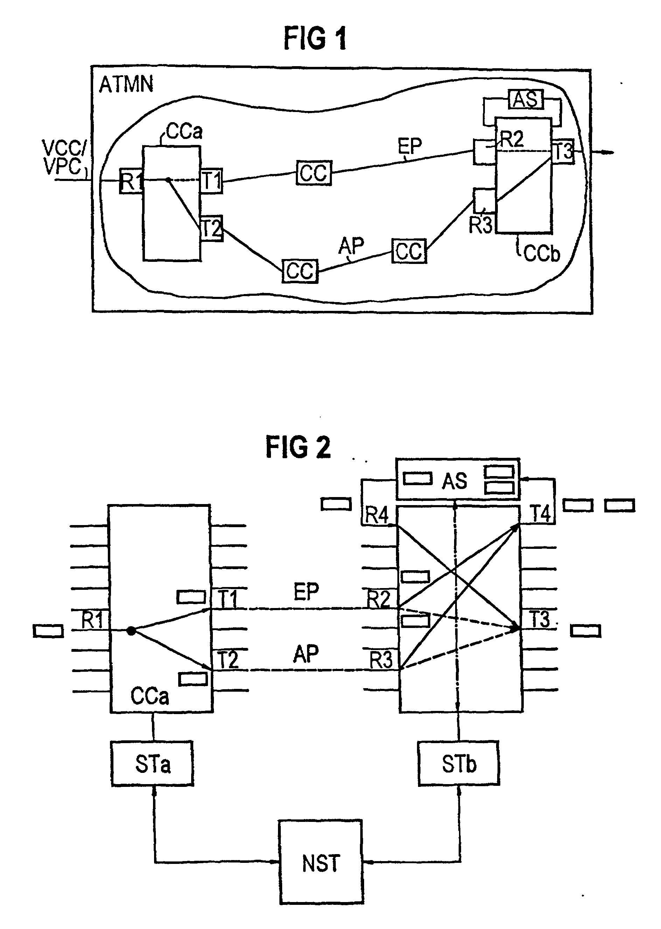

In FIG 1 ist ausschnittweise ein nach einem asynchronen Transfermodus ("Asynchronous Transfer Mode") arbeitendes ATM-Kommunikationsnetz ATMN dargestellt, welches aus einer Vielzahl von Koppeleinrichtungen gebildet sein möge. Innerhalb dieses ATM-Kommunikationsnetzes werden in gleicher Richtung verlaufende, in bekannter Weise eingerichtete virtuelle Verbindungen beispielsweise über sogenannte virtuelle Pfade geführt, d.h. diese virtuellen Pfade führen jeweils eine Mehrzahl von virtuellen Verbindungen. Die Koppeleinrichtungen mögen dabei als sogenannte "Cross Connects" ausgebildet sein, über welche virtuelle Pfade fest eingerichtet werden und über längere Zeit bestehen bleiben. Diese Koppeleinrichtungen können jedoch auch aus Vermittlungseinrichtungen bestehen, über welche virtuelle Pfade im Zuge eines entsprechenden Verbindungsaufbaus wahlweise eingerichtet werden können. Da ein solcher virtueller Pfad beispielsweise bis zu 65536 virtuelle Verbindungen enthalten und außerdem eine hohe Summenbitrate von beispielsweise bis zu 2,4 Gbyte/s aufweisen kann, muß ein solcher virtueller Pfad im Bedarfsfalle möglichst schnell auf einen Ersatzweg ohne Verlust von Nachrichtenzellen umgeschaltet werden. Dafür wird innerhalb des ATM-Kommunikationsnetzes für jeden Pfad, im folgenden als aktiver Pfad bezeichnet, ein Ersatzpfad festgelegt. Der jeweilige aktive Pfad und der zugehörige Ersatzpfad werden im folgenden als Pfadpaar bezeichnet und verlaufen dabei über getrennte Wege. Es sei hier bereits darauf hingewiesen, daß zwar nachfolgend die vorliegende Erfindung anhand von innerhalb des ATM-Kommunikationsnetzes eingerichteten virtuellen Pfaden erläutert wird, die Erfindung jedoch auch auf einzelne virtuelle Verbindungen bzw. Pfadgruppen anwendbar ist, die jeweils über ein aus einem aktiven Weg und einem Ersatzweg gebildetes Wegepaar verlaufen können.

In FIG 1 ist stellvertretend für eine Vielzahl von innerhalb des ATM-Kommunikationsnetzes ATMN verlaufenden virtuellen Pfadpaaren ein zwischen zwei Koppeleinrichtungen einrichtbares virtuelles Pfadpaar schematisch dargestellt. Die Koppeleinrichtungen sind dabei mit CCa und CCb bezeichnet. Die Koppeleinrichtung CCa stellt den Anfang des virtuellen Pfadpaares dar und erhält an einer Schnittstelleneinrichtung R1 die innerhalb eines Zubringerpfades VPC auftretenden Nachrichtenzellen zugeführt. Der mit AP bezeichnete aktive Pfad verläuft von der Koppeleinrichtung CCa aus über eine mit dieser verbundene Schnittstelleneinrichtung T2 sowie zwei mit CC bezeichnete Zwischenkoppeleinrichtungen zu einer mit R3 bezeichneten Schnittstelleneinrichtung der Koppeleinrichtung CCb. Der zugehörige Ersatzpfad EP verläuft dagegen über eine der Koppeleinrichtung CCa zugehörige Schnittstelleneinrichtung T1 und eine Zwischenkoppeleinrichtung CC zu einer Schnittstelleneinrichtung R2 der Koppeleinrichtung CCb. Im Normalfall mögen dabei Nachrichtenzellen lediglich über den aktiven Pfad AP an eine einen Ausgang der Koppeleinrichtung CCb darstellende Schnittstelleneinrichtung T3 weitergeleitet werden. Lediglich auf einen Anstoß hin wird mit Hilfe einer der Koppeleinrichtung CCb zugeordneten zentralen Synchronisiereinrichtung AS "Alignment Server" von dem aktiven Pfad AP auf den zugehörigen Ersatzpfad EP umgeschaltet, d.h. nach der Umschaltung werden die über diesen Ersatzpfad eintreffenden Nachrichtenzellen an die Schnittstelleneinrichtung T3 weitergeleitet.

Im übrigen kann der Ersatzpfad EP je nach der Auslegung des ATM-Komunikationsnetzes entweder erst auf den genannten Anstoß hin nach Maßgabe der Netzauslastung und der geforderten Übertragungskapazität festgelegt werden oder bereits hinsichtlich des Weges festgelegt sein, wobei dann für den Ersatzpfad erst auf einen Anstoß hin eine der Übertragungskapazität des aktiven Pfades entsprechende Übertragungskapazität angefordert wird. Dabei kann die angeforderte Übertragungskapazität bis zu einem Anstoß für einen niederprioren Nachrichtenverkehr benutzt werden.

Anhand der FIG 2 wird nachfolgend auf das Verfahren zur Umschaltung von dem aktiven Pfad AP auf den Ersatzpfad EP näher eingegangen.

In FIG 2 sind von den in FIG 1 dargestellten Koppeleinrichtungen lediglich die beiden Koppeleinrichtungen CCa und CCb wiedergegeben. Dabei wird davon ausgegangen, daß zunächst über den Zubringerpfad VPC eintreffende Nachrichtenzellen ausschließlich von der Schnittstelleneinrichtung R1 der Koppeleinrichtung CCa her über den aktiven Pfad AP zu der Schnittstelleneinrichtung T3 der Koppeleinrichtung CCb hin übertragen werden. Die Nachrichtenzellen mögen dafür innerhalb der Koppeleinrichtungen CCa und CCb beispielsweise nach dem sogenannten "Self-Routing"-Prinzip weitergeleitet werden, indem jeder Nachrichtenzelle nach Maßgabe des in dieser jeweils vorhandenen externen Zellenkopfes ("Header") bei Eintritt in die jeweilige Koppeleinrichtung ein interner "Self-Routing"-Zellenkopf vorangestellt wird. Dieser interne Zellenkopf wird im Zuge des Einrichtens des virtuellen Pfades beispielsweise durch eine der jeweiligen Koppeleinrichtung zugeordnete Steuereinrichtung ST bereitgestellt und enthält sämtliche Wegeinformationen für die Weiterleitung der zu dem virtuellen Pfad gehörenden Nachrichtenzellen innerhalb der jeweiligen Koppeleinrichtung. Im Falle der Koppeleinrichtung CCa sind das Informationen für die Übertragung von Nachrichtenzellen zwischen der Schnittstelleneinrichtung R1 und der Schnittstelleneinrichtung T2. Dagegen enthält der in der Koppeleinrichtung CCb für den virtuellen Pfad bereitgestellte interne Zellenkopf Informationen für die Übertragung von Nachrichtenzellen von der Schnittstelleneinrichtung R3 zu der Schnittstelleneinrichtung T3. Der jeweilige interne Zellenkopf ist dabei in der Schnittstelleneinrichtung R1 bzw. R3 und in entsprechenden Schnittstelleneinrichtungen der übrigen in den virtuellen Pfad einbezogenen Koppeleinrichtungen des Kommunikationsnetzes ATMN gespeichert.

Im übrigen kann anstelle des "Self-Routing"-Prinzips auch alternativ das sogenannte Umwerteprinzip für die Weiterleitung von Nachrichtenzellen innerhalb der jeweiligen Koppeleinrichtung benutzt sein, nach welchem lediglich der der jeweiligen Nachrichtenzelle zugehörige externe Zellenkopf modifiziert wird.

Auf ein Umsteuersignal, welches beispielsweise von einer zentralen Netz-Steuereinrichtung NST her in Form wenigstens einer Steuerzelle ("Operation, Administration and Maintenance"-Zelle), im folgenden als OAM-Zelle bezeichnet, der Steuereinrichtung ST einer der Koppeleinrichtungen CCa und CCb zugeführt ist, wird eine Umschaltung des virtuellen Pfades AP auf den Ersatzpfad EP eingeleitet. Bei der ein solches Umsteuersignal empfangenden Steuereinrichtung möge es sich dabei beispielsweise um die der Koppeleinrichtung CCb zugeordnete Steuereinrichtung STb handeln. Diese Steuereinrichtung stellt daraufhin einen neuen internen Zellenkopf bereit, der Wegeinformationen enthält, um die dem betreffenden virtuellen Pfad AP zugehörigen Nachrichtenzellen von der Schnittstelleneinrichtung R3 her auf eine Schnittstelleneinrichtung T4 umzuleiten, an welcher die bereits erwähnte zentrale Synchronisiereinrichtung AS eingangsseitig angeschlossen ist. Dieser neue interne Zellenkopf wird der Schnittstelleneinrichtung R3 zugeführt und dort anstelle des bisher für den virtuellen Pfad festgehaltenen internen Zellenkopfes gespeichert. Damit werden nachfolgend eintreffende Nachrichtenzellen des virtueilen Pfades AP nicht mehr direkt der Schnittstelleneinrichtung T3, sondern zunächst der zentralen Synchronisiereinrichtung AS zugeführt, die über einen in der Koppeleinrichtung CCb eingerichteten Steuerkanal ebenfalls die OAM-Zelle zugeführt erhält.

Ausgangsseitig ist die zentrale Synchronisiereinrichtung AS an eine Schnittstelleneinrichtung R4 angeschlossen, in welcher ein interner Zellenkopf hinterlegt ist, der den diese zentrale Synchronisiereinrichtung durchlaufenden Nachrichtenzellen für eine Weiterleitung an die Schnittstelleneinrichtung T3 vorangestellt wird. Damit ist die zentrale Synchronisiereinrichtung in die Übertragung von über den aktiven Pfad AP eintreffenden Nachrichtenzellen mit einbezogen.

Nach der Zuschaltung der zentralen Synchronisiereinrichtung AS wird entweder von dieser oder der zugehörigen Steuereinrichtung ST her ein Steuersignal in Form wenigstens einer dieses Zuschalten anzeigenden OAM-Zelle zu der Steuereinrichtung STa der Koppeleinrichtung CCa hin übertragen. Dafür kann beispielsweise ein zwischen den beiden Koppeleinrichtungen eingerichteter virtueller Steuerkanal benutzt werden, der beispielsweise in einem dem aktiven Pfad AP zugeordneten, jedoch in Gegenrichtung verlaufenden Pfad eingerichtet ist. Auf das Auftreten einer solchen OAM-Zelle hin wird dann von der Steuereinrichtung STa der bisher in der Schnittstelleneinrichtung R1 für den virtuellen Pfad AP gespeicherte interne Zellenkopf derart modifiziert, daß nachfolgende Nachrichtenzellen des virtuellen Pfades dupliziert und die daraus resultierenden, einander zugeordneten Nachrichtenzellen gesondert über den aktiven Pfad AP und den zugehörigen Ersatzpfad EP übertragen werden. Dabei ist auf das Zuschalten der zentralen Synchronisiereinrichtung AS hin unter der Steuerung der Steuereinrichtung STb in der Schnittstelleneinrichtung R2 für diesen Ersatzpfad ein interner Zellenkopf hinterlegt, durch welchen die diesem Ersatzpfad zugehörigen Nachrichtenzellen ebenfalls über die Schnittstelleneinrichtung T4 zu der zentralen Synchronisiereinrichtung AS hin übertragen werden. Von dieser werden jedoch zunächst in einer nunmehr beginnenden Synchronisierphase lediglich die über den aktiven Pfad EP zugeführten Nachrichtenzellen weitergeleitet. Während der Synchronisierphase, auf die im folgenden noch näher eingegangen wird, werden jedoch die über den aktiven Pfad AP und den Ersatzpfad EP eintreffenden Nachrichtenzellenströme synchronisiert, indem die auf diesen Pfaden auftretenden unterschiedlichen Verzögerungszeiten ausgeglichen werden. Tritt dabei auf dem aktiven Pfad eine geringere Verzögerungszeit auf als auf dem Ersatzpfad, so werden die über den aktiven Pfad übertragenen Nachrichtenzellen verzögert, um einen Gleichlauf mit den Nachrichtenzellen auf dem Ersatzpfad zu erreichen. Erfahren dagegen die Nachrichtenzellen auf dem Ersatzpfad eine geringere Verzögerung als die zugehörigen Nachrichtenzellen auf dem aktiven Pfad, so werden die über den Ersatzpfad übertragenen Nachrichtenzellen entsprechend verzögert.

Bei einem dadurch erreichten Gleichlauf wird dann von der zentralen Synchronisiereinrichtung AS auf den Ersatzpfad umgeschaltet, d.h. von diesem Zeitpunkt an werden dann lediglich noch die über den Ersatzpfad eintreffenden Nachrichtenzellen zu der Schnittstelleneinrichtung T3 hin übertragen. Im Anschluß daran wird der zugehörigen Steuereinrichtung STb ein Steuersignal, beispielsweise in Form einer die Umschaltung bestätigenden OAM-Zelle, zugeführt. Daraufhin wird unter der Steuerung dieser Steuereinrichtung in der Schnittstelleneinrichtung R2 für den Ersatzpfad EP ein interner Zellenkopf hinterlegt, durch welchen die nachfolgenden Nachrichtenzellen direkt zu der Schnittstelleneinrichtung T3 hin übertragen werden, d.h. die zentrale Synchronisiereinrichtung AS wird aus dem bisherigen Übertragungsweg herausgetrennt. Da bei diesem Heraustrennen von der zentralen Synchronisiereinrichtung AS her noch abgegebene Nachrichtenzellen von über den Ersatzweg direkt der Schnittstelleneinrichtung T3 zugeführten Nachrichtenzellen überholt werden können, ist dafür Sorge zu tragen, daß die Nachrichtenzellen in der richtigen Reihenfolge weitergeleitet werden. Hierfür kann beispielsweise ein in der Schnittstelleneinrichtung T3 vorhandener Pufferspeicher benutzt sein, durch welchen die weiterzuleitenden Nachrichtenzellen entsprechend der geforderten Reihenfolge sortiert werden. Darüber hinaus wird der Steuereinrichtung STa der Koppeleinrichtung CCa über den zuvor genannten Steuerkanal ein Steuersignal in Form wenigstens einer die Umschaltung auf den Ersatzpfad anzeigenden OAM-Zelle zugeführt, woraufhin unter der Steuerung der Steuereinrichtung STa der in der Schnittstelleneinrichtung R1 bisher gespeicherte interne Zellenkopf derart modifiziert wird, daß nachfolgend Nachrichtenzellen lediglich noch über den Ersatzpfad EP weitergeleitet werden.

Vorstehend wurde davon ausgegangen, daß das erwähnte Umsteuersignal (OAM-Zelle bzw. OAM-Zellen) der Steuereinrichtung STb von der Netz-Steuereinrichtung NST her zugeführt worden ist. Alternativ dazu kann diese OAM-Zelle bzw. können diese OAM-Zellen auch der Steuereinrichtung STa der Koppeleinrichtung CCa zugeführt sein. In diesem Falle wird zunächst von der Steuereinrichtung STa aus beispielsweise über den aktiven Pfad AP eine festgelegte OAM-Zelle zu der Steuereinrichtung STb hin übertragen, auf welche in der Steuereinrichtung STb und nachfolgend in der Steuereinrichtung STa die zuvor erläuterten Steuerungsvorgänge ablaufen. Das heißt, die zeitweise Übertragung von Nachrichtenzellen von der Koppeleinrichtung CCa her sowohl über den aktiven Pfad AP als auch über den Ersatzpfad EP und die anschließende ausschließliche Übertragung von Nachrichtenzellen über den Ersatzpfad erfolgen erst dann, nachdem von der Koppeleinrichtung CCb eine die erfolgte Zuschaltung der zentralen Synchronisiereinrichtung AS anzeigende OAM-Zelle abgegeben wurde.

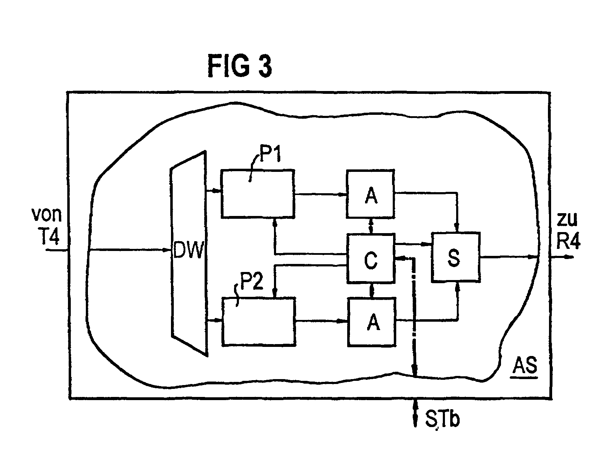

Anhand der FIG 3 wird nun auf das zuvor bereits erwähnte Synchronisierverfahren sowie auf einen möglichen Aufbau der zentralen Synchronisiereinrichtung AS näher eingegangen. Dabei sind für diese zentrale Synchronisiereinrichtung lediglich die zum Verständnis der vorliegenden Erfindung relevanten Schaltungsteile aufgeführt. Danach weist die zentrale Synchronisiereinrichtung AS eingangsseitig eine Datenweiche DW auf, welcher von der Schnittstelleneinrichtung T4 her zunächst der über den aktiven Pfad AP auftretende Nachrichtenzellenstrom und anschließend während der Synchronisierphase im Multiplexbetrieb zusätzlich der über den Ersatzpfad EP auftretende Nachrichtenzellenstrom zugeführt ist. In den jeweiligen Nachrichtenzellenstrom ist dabei, beispielsweise durch die Koppeleinrichtung CCa, in festgelegten Zeitabständen jeweils eine besonders gekennzeichnete OAM-Zelle eingefügt. Diese OAM-Zellen weisen jeweils eine von OAM-Zelle zu OAM-Zelle sich fortlaufend verändernde Folgenummer auf. Beim vorliegenden Ausführungsbeispiel ist nach jeweils 256 Nachrichtenzellen jeweils eine OAM-Zelle unter Verzögern des jeweiligen Nachrichtenzellenstromes eingefügt und die jeweilige Folgenummer durch 8 Bit codiert. Alternativ dazu kann durch eine solche OAM-Zelle auch eine in dem jeweiligen Nachrichtenzellenstrom enthaltene, auf die festgelegte Anzahl von Nachrichtenzellen folgende Leerzelle ersetzt werden. Tritt eine derartige Leerzelle dabei nicht innerhalb einer festgesetzten Zeit, beispielsweise einer durch 128 Zellen festgelegten Zeit auf, so wird eine OAM-Zelle gezielt in den Nachrichtenzellenstrom eingefügt, und zwar unter Verzögern des Nachrichtenzellenstromes um 1 Zelle. Bei dieser Vorgehensweise sollten jedoch die festgelegten Zeitabstände für das Einfügen von OAM-Zellen im Mittel eingehalten werden.

Der Nachrichtenzellenstrom des aktiven Pfades AP durchläuft von der Datenweiche DW aus einen Pufferspeicher P1, während der Nachrichtenzellenstrom des Ersatzpfades EP einem Pufferspeicher P2 zugeführt ist. Jedem dieser Pufferspeicher ist eine gesonderte Auswerteeinrichtung A nachgeschaltet, wobei diese Auswerteeinrichtungen gemeinsam mit einer Steuereinrichtung C in Verbindung stehen. Diese ist mit einem Steuereingang einer den Ausgang der zentralen Synchronisiereinrichtung AS darstellenden Schalteinrichtung S verbunden, die eingangsseitig zusätzlich mit Ausgängen der Auswerteeinrichtungen A in Verbindung steht. Diese Schalteinrichtung ist dabei auf das Auftreten einer oben erwähnten, eine Umschaltung fordernden OAM-Zelle hin durch die Steuereinrichtung C derart gesteuert, daß zunächst von den die Pufferspeicher P1 und P2 durchlaufenden Nachrichtenzellen lediglich die über den aktiven Pfad AP eintreffenden Nachrichtenzellen weitergeleitet werden. Dabei wird jedoch durch die jeweilige Auswerteeinrichtung A ständig das Auftreten von OAM-Zellen überwacht und die jeweilige OAM-Zelle der Steuereinrichtung C zugeführt. Anhand der in den OAM-Zellen jeweils geführten Folgenummer ermittelt diese zunächst, welcher der beiden Nachrichtenzellenströme der voreilende ist. Nachfolgende Nachrichtenzellen des voreilenden Nachrichtenzellenstromes werden dann unter der Steuerung der Steuereinrichtung C in dem jeweiligen Pufferspeicher (P1 bzw. P2) vor einer Weiterleitung zwischengespeichert, bis in dem nacheilenden Nachrichtenzellenstrom eine Folgenummer auftritt, die der für den voreilenden Nachrichtenzellenstrom gerade ermittelten Folgenummer entspricht. Bei Gleichheit dieser Folgenummern, d.h. bei einem erreichten Gleichlauf der beiden Nachrichtenzellenströme, wird dann die Schalteinrichtung S von der Steuereinrichtung C derart gesteuert, daß lediglich noch die über den Ersatzpfad eintreffenden Nachrichtenzellen weitergeleitet werden.

Bei vorliegendem Ausführungsbeispiel besteht dabei auch die Möglichkeit, für den Fall, daß der über den aktiven Pfad übertragene Nachrichtenzellenstrom der voreilende ist, anstelle einer gerade erläuterten abrupten Verzögerung eine graduelle Verzögerung durchzuführen, indem dieser Nachrichtenzellenstrom beim Durchlauf des Pufferspeichers P1 schrittweise unter der Steuerung der Steuereinrichtung C verzögert wird, bis in der Steuereinrichtung C gleichzeitig zwei gleiche Folgenummern vorliegen. In entsprechender Weise kann eine zunächst für den Ersatzpfad zu realisierende Verzögerung graduell nach erfolgter Umschaltung wieder abgebaut werden. Diese graduelle Veränderung der Verzögerung bringt dabei den Vorteil mit sich, daß Verzögerungszeitschwankungen innerhalb tolerierbarer Grenzwerte gehalten werden können. Dies ist insbesondere dann von Bedeutung, wenn innerhalb des umzuschaltenden virtuellen Pfades Audio-, Video- oder Multimedia-Verbindungen verlaufen, die garantierte minimale Verzögerungszeitschwankungen erfordern. Außerdem wird durch eine solche graduelle Änderung die durch die Weiterleitung von Nachrichtenzellen verursachte Burst-Größe beschränkt.

Vorstehend wurde lediglich als Beispiel der Fall betrachtet, daß ein einziger aktiver Pfad mit Hilfe einer zentralen Synchronisiereinrichtung auf einen zugeordneten Ersatzpfad umgeschaltet werden kann. Eine solche zentrale Synchronisiereinrichtung kann auch im Multiplexbetrieb einer Mehrzahl von virtuellen Pfaden zugeordnet sein, wenn diese sequentiell auf einen zugeordneten Ersatzpfad umzuschalten sind. Bei einer geforderten simultanen Umschaltung von virtuellen Pfaden kann eine der Anzahl der simultan umzuschaltenden virtuellen Pfade entsprechende Anzahl von zentralen Synchronisiereinrichtungen vorgesehen sein.

Darüber hinaus sei noch darauf hingewiesen, daß das vorstehende Verfahren zur Umschaltung von virtuellen Pfaden auf Ersatzpfade auch derart modifiziert sein kann, daß von der Koppeleinrichtung CCa her ein zugeführter Nachrichtenzellenstrom durch Duplizieren ständig sowohl über einen aktiven Pfad als auch über einen zugeordneten Ersatzpfad übertragen wird und die daraus resultierenden beiden Nachrichtenzellenströme der jeweiligen zentralen Synchronisiereinrichtung AS zugeführt sind. In dieser erfolgt ständig eine oben erläuterte Synchronisierung, um bei Ausfall eines der Wege auf den verbleibenden Weg umzuschalten.

Schließlich sei noch darauf hingewiesen, daß vorstehend lediglich als Beispiel die Umschaltung eines virtuellen Pfades auf einen Ersatzpfad beschrieben worden ist. Die vorliegende Erfindung ist jedoch nicht auf diesen Anwendungsfall beschränkt. Vielmehr sind auch einzelne virtuelle Verbindungen oder eine Mehrzahl von virtuellen Pfaden umfassende Pfadgruppen von einem aktiven Übertragungsweg auf einen zugeordneten Ersatzweg umschaltbar. Darüber hinaus ist die vorliegende Erfindung nicht nur in ATM-Kommunikationsnetzen, sondern allgemein in zellenorientierten Kommunikationsnetzen anwendbar, wenn innerhalb dieser Kommunikationsnetze Nachrichtenzellenströme störungsfrei, d.h. ohne Zellenverlust, ohne Duplizierung von Zellen, ohne Informationsverfälschungen in den einzelnen Zellen und unter Einhaltung der Zellenreihenfolge, von einem aktiven Weg auf einen Ersatzweg umzuleiten sind.

## Patentansprüche

1. Verfahren zum Umleiten eines in einem virtuellen Pfad bzw. im Zuge einer virtuellen Verbindung über einen aktiven Weg (AP) übertragenen Nachrichtenzellenstromes auf einen Ersatzweg (EP) in einem zellenorientierten, eine Mehrzahl von Koppeleinrichtungen aufweisenden Kommunikationsnetz (ATMN),
wobei der Ersatzweg (EP) zusammen mit dem aktiven Weg ein virtuelles Wegepaar bildet,
wobei der Nachrichtenzellenstrom zunächst durch eine am Anfang des Wegepaares liegende Koppeleinrichtung (CCa) über den aktiven Weg zu einer am Ende des Wegepaares liegenden Koppeleinrichtung (CCb) hin übertragen wird,
**dadurch gekennzeichnet,**
**daß** auf ein Anforderungssignal hin der Nachrichtenzellenstrom in der am Anfang des Wegepaares liegenden Koppeleinrichtung (CCa) dupliziert wird und die beiden daraus resultierenden Nachrichtenzellenströme gesondert über den aktiven Weg (AP) und über den Ersatzweg (EP) einer der am Ende des Wegepaares liegenden Koppeleinrichtung (CCb) zugeordneten, dem virtuellen Pfad bzw der virtuellen Verbindung temporär zugewiesenen zentralen Synchronisiereinrichtung (AS) zugeführt werden,
**daß** von dieser zentralen Synchronisiereinrichtung (AS) aus einerseits zunächst lediglich der über den aktiven Weg (AP) zugeführte Nachrichtenzellenstrom über die zugeordnete Koppeleinrichtung (CCb) weitergeleitet wird und andererseits die beiden zugeführten Nachrichtenzellenströme synchronisiert werden,
**daß** mit Erreichen einer solchen Synchronisierung von der zentralen Synchronisiereinrichtung (AS) zunächst anstelle des über den aktiven Weg (AP) zugeführten Nachrichtenzellenstromes nunmehr der über den Ersatzweg (EP) zugeführte Nachrichtenzellenstrom über die zugeordnete Koppeleinrichtung (CCb) weitergeleitet wird,
und **daß** anschließend die zentrale Synchronisiereinrichtung (AS) aus dem Übertragungsweg für den über den Ersatzweg (EP) geführten Nachrichtenzellenstrom ausgekoppelt wird.

2. Verfahren nach Anspruch 1,
**dadurch gekennzeichnet,**
**daß** der Ersatzweg (EP) erst auf das Anforderungssignal hin festgelegt und eingerichtet wird.

3. Verfahren nach Anspruch 1,
**dadurch gekennzeichnet,**
**daß** der Ersatzweg (EP) und die dafür erforderliche Übertragungskapazität bereits zusammen mit dem aktiven Weg (AP) festgelegt wird, die Übertragung des Nachrichtenzellenstromes jedoch bis zum Auftreten des Anforderungssignales ausschließlich über den aktiven Weg (AP) erfolgt.

4. Verfahren nach Anspruch 1,
**dadurch gekennzeichnet,**
**daß** zusammen mit dem aktiven Weg (AP) lediglich der Verlauf des Ersatzweges (EP) festgelegt wird, die für diesen Ersatzweg benötigte Übertragungskapazität jedoch erst auf das Anforderungssignal hin angefordert wird.

5. Verfahren nach Anspruch 3 oder 4,
**dadurch gekennzeichnet,**
**daß** die für den Ersatzweg (EP) benötigte Übertragungskapazität bis zum Auftreten des Anforderungssignals hin für niederprioren Nachrichtenverkehr benutzt wird.

6. Verfahren nach Anspruch 1,
**dadurch gekennzeichnet,**
**daß** dieses derart modifiziert ist, daß durch die am Anfang des Wegepaares liegende Koppeleinrichtung (CCa) der dieser zugeführte Nachrichtenzellenstrom ständig dupliziert wird und die beiden daraus resultierenden Nachrichtenzellenströme gesondert über den aktiven Weg (AP) und über den Ersatzweg (EP) über die am Ende des Wegepaares liegende Koppeleinrichtung (CCb) der zentralen Synchronisiereinrichtung (AS) zugeführt werden,
**daß** von dieser zentralen Synchronisiereinrichtung (AS) aus einerseits lediglich der über den aktiven Weg zugeführte Nachrichtenzellenstrom über die zugeordnete Koppeleinrichtung (CCb) weitergeleitet wird und andererseits die beiden zugeführten Nachrichtenzellenströme ständig synchronisiert werden und daß bei Ausfall des aktiven Weges der über den Ersatzweg eintreffende Nachrichtenzellenstrom weitergeleitet wird.

7. Verfahren nach einem der Ansprüche 1 bis 6,
**dadurch gekennzeichnet,**
**daß** in den beiden der zentralen Synchronisiereinrichtung (AS) zugeführten Nachrichtenzellenströmen jeweils in festgelegten Zeitabständen jeweils ein Steuerzelle eingefügt ist,
**daß** in den Steuerzellen jeweils eine von Steuerzelle zu Steuerzelle sich fortlaufend verändernde Folgenummer enthalten ist,
und **daß** durch die zentrale Steuereinrichtung (AS) nach Maßgabe der in den Steuerzellen der beiden Nachrichtenzellenströme auftretenden Folgenummern eine Synchronisierung der beiden Nachrichtenzellenströme hinsichtlich des Ausgleiches der durch den aktiven Weg und Ersatzweg bedingten Laufzeitunterschiede vorgenommen wird.

8. Verfahren nach Anspruch 7,
**dadurch gekennzeichnet,**
**daß** durch die zentrale Synchronisiereinrichtung (AS) der Ausgleich der Laufzeitunterschiede schrittweise durchgeführt wird.

9. Zellenorientiertes Kommunikationsnetz (ATMN) mit einer Schaltungsanordnung zum Umleiten eines in einem virtuellen Pfad bzw. im Zuge einer virtuellen Verbindung über einen aktiven Weg (AP) übertragenen Nachrichtenzellenstromes auf einen Ersatzweg (EP), und mit einer Mehrzahl von Koppeleinrichtungen
wobei der Ersatzweg (EP) zusammen mit dem aktiven Weg ein virtuelles Wegepaar bildet,
wobei eine am Anfang des Wegepaares liegende Koppeleinrichtung (CCa) derart konfigurierbar ist, daß der dieser zugeführte Nachrichtenzellenstrom des betreffenden virtuellen Pfades bzw. der betreffenden virtuellen Verbindung auf ein Anforderungssignal hin dupliziert wird und die beiden daraus resultierenden Nachrichtenzellenströme gesondert über den aktiven Weg (AP) und über den Ersatzweg (EP) einer am Ende des Wegepaares liegenden Koppeleinrichtung (CCb) zugeführt werden,
**dadurch gekennzeichnet,**
**daß** die Schaltungsanordnung eine Zentrale Synchronisier einrichtung (AS) aufweist, die der am Ende des Wegepaares liegenden Koppeleinrichtung (CCb) zugeordnet ist und die mit den beiden Nachrichtenzellenströmen beaufschlagt ist, wobei der Synchronisiereinrichtung (AS) über die zugeordnete Koppeleinrichtung (CCb) die beiden Nachrichtenströme temporär zuführbar sind und wobei die Synchronisier einrichtung (AS) derart ausgebildet ist,
**daß** einerseits von dieser zunächst lediglich der von dem aktiven Weg (AP) her zugeführte Nachrichtenzellenstrom der zugeordneten Koppeleinrichtung (CCb) für eine Weiterleitung wieder zuführbar ist und andererseits die beiden zugeführten Nachrichtenzellenströme synchronisierbar sind und nach erfolgter Synchronisierung anstelle des über den aktiven Weg (AP) zugeführten Nachrichtenzellenstromes nunmehr der über den Ersatzweg (EP) zugeführte Nachrichtenzellenstrom der zugeordneten Koppeleinrichtung (CCb) wieder zuführbar ist,
und **daß** die zentrale Synchronisiereinrichtung (AS) anschließend von der zugeordneten Koppeleinrichtung (CCb) her aus der Übertragung des über den Ersatzweg (EP) geführten Nachrichtenzellenstrom auskoppelbar ist.

10. Zellenorientiertes Kommunikationsnetz nach Anspruch 9,
**dadurch gekennzeichnet,**
**daß** eine Mehrzahl von zentralen Synchronisiereinrichtungen vorgesehen ist, welche jeweils individuell einem umzuleitenden virtuellen Pfad bzw. einer umzuleitenden virtuellen Verbindung zuordenbar sind.

11. Zellenorientiertes Kommunikationsnetz nach Anspruch 9 oder 10,
**dadurch gekennzeichnet,**
**daß** die jeweilige zentrale Steuereinrichtung (AS) eingangsseitig an einen Ausgangsleitungs-Anschluß (T4) und ausgangsseitig an einen Eingangsleitungs-Anschluß der zugeordneten Koppeleinrichtung (CCb) angeschlossen ist.

## Claims

1. Method for diverting an information cell stream transmitted on a virtual path or, respectively, via an active path (AP) in the course of a virtual connection, to a backup path (EP) in a cell-oriented communication network having a multiplicity of switching devices (ATMN), the backup path (EP), together with the active path, forming a virtual pair of paths,
the information cell stream first being transmitted by a switching device (CCa) located at the beginning of the pair of paths via the active path to a switching device (CCb) located at the end of the pair of paths,
**characterized in**
**that**, following a request signal, the information cell stream is duplicated in the switching device (CCa) located at the beginning of the pair of paths and the two resultant information cell streams are supplied separately via the active path (AP) and via the backup path (EP) to a central synchronising device (AS) allocated to the switching device (CCb) located at the end of the pair of paths and temporarily assigned to the virtual path or to the virtual connection, respectively,
**that**, from this central synchronising device (AS), initially only the information cell stream supplied via the active path (AP) is forwarded via the associated switching device (CCb), on the one hand, and, on the other hand, the two supplied information cell streams are synchronised,
**that** when such a synchronisation has been achieved by the central synchronising device (AS), initially the information cell stream supplied via the backup path (EP) is now forwarded via the associated switching device (CCb) instead of the information cell stream supplied via the active path (AP)
and **that** subsequently the central synchronising device (AS) is decoupled from the transmission path for the information cell stream conducted via the backup path (EP).

2. Method according to Claim 1,
**characterized in**
**that** the backup path (EP) is only established and set up following the request signal.

3. Method according to Claim 1,
**characterized in**
**that** the backup path (EP) and the transmission capacity required for it is already established together with the active path (AP), but the information cell stream is exclusively transmitted via the active path (AP) until the request signal occurs.

4. Method according to Claim 1,
**characterized in**
**that** together with the active path (AP), only the course of the backup path (EP) is established but the transmission capacity needed for this backup path is only requested following the request signal.

5. Method according to Claim 3 or 4,
**characterized in**
**that** the transmission capacity needed for the backup path (EP) is used for low-priority information traffic until the request signal occurs.

6. Method according to Claim 1,
**characterized in**
**that** it is modified in such a manner that the switching device (CCa) located at the beginning of the pair of paths continuously duplicates the information cell stream supplied to it and supplies the two resultant information cell streams separately via the active path (AP) and via the backup path (EP) to the central synchronising device (AS) via the switching device (CCb) located at the end of the pair of paths,
**that**, from this central synchronising device (AS), only the information cell stream supplied via the active path is forwarded via the associated switching device (CCb), on the one hand, and, on the other hand, the two supplied information cell streams are continuously synchronised and that in the case of a failure of the active path, the information cell stream arriving via the backup path is forwarded.

7. Method according to one of Claims 1 to 6,
**characterized in**
**that** a control cell is in each case inserted in each case at predetermined time intervals into the two information cell streams supplied to the central synchronising device (AS),
**that** the control cells in each case contain a consecutive number which continuously changes from control cell to control cell,
and **that** the central control device (AS) synchronises the two information cell streams with regard to equalising the delay differences due to the active path and backup path as determined by the consecutive numbers occurring in the control cells of the two information cell streams.

8. Method according to Claim 7,
**characterized in**
**that** the central synchronising device (AS) performs the equalising of the delay differences in increments.

9. Cell-oriented communication network (ATMN) comprising a circuit arrangement for diverting an information cell stream transmitted on a virtual path or, respectively, in the course of a virtual connection via an active path (AP) to a backup path (EP) and comprising a multiplicity of switching devices,
the backup path (EP), together with the active path forming a virtual pair of paths,
a switching device (CCa) located at the beginning of the pair of paths being configurable in such a manner that the information cell stream of the relevant virtual path or, respectively, the relevant virtual connection, supplied to it, is duplicated following a request signal and the two resultant information cell streams are supplied separately via the active path (AP) and via the backup path (EP) to a switching device (CCb) located at the end of the pair of paths,
**characterized in**
**that** the circuit arrangement exhibits a central synchronising device (AS) which is allocated to the switching device (CCb) located at the end of the pair of paths and to which the two information cell streams are applied, in which arrangement the two information streams can be temporarily supplied to the synchronising device (AS) via the associated switching device (CCb) and the synchronising device (AS) is constructed in such a manner that the latter can initially supply only the information cell stream supplied from the active path (AP) to the associated switching device (CCb) for forwarding, on the one hand, and, on the other hand, the two supplied information cell streams can be synchronised and after completed synchronisation, the information cell stream supplied by the backup path (EP) can now be supplied again to the associated switching device (CCb) instead of the information cell stream supplied via the active path (AP),
and **that** the central synchronising device (AS) can then be decoupled from the transmission of the information cell stream conducted via the backup path (EP) from the associated switching device (CCb).

10. Cell-oriented communication network according to Claim 9, **characterized in that** a multiplicity of central synchronising devices is provided which in each case can be allocated individually to a virtual path to be diverted or, respectively, to a virtual connection to be diverted.

11. Cell-oriented communication network according to Claim 9 or 10,
**characterized in**
**that** the respective central control device (AS) is connected to an output line terminal (T4) at its input and to an input line terminal of the associated switching device (CCb) at its output.

## Revendications

1. Procédé pour dévier un flux de cellules d'informations, transmis dans un chemin virtuel ou au cours d'une liaison virtuelle par l'intermédiaire d'une voie active (AP) sur une voie détournée (EP) dans un réseau de communication (ATMN) avec cellules et comportant une multiplicité de dispositifs de connexion,
dans lequel la voie détournée (EP) forme conjointement avec la voie active une paire de voies virtuelle,
dans lequel le flux de cellules d'informations est d'abord transmis par un dispositif de connexion (CCa) se trouvant au début de la paire de voies, par l'intermédiaire de la voie active, à un dispositif de connexion (CCb) se trouvant à la fin de la paire de voies,
**caractérisé par le fait que**
suite à un signal de demande, on duplique le flux de cellules d'informations dans le dispositif de connexion (CCa) se trouvant au début de la paire de voies et on envoie les deux flux de cellules d'informations résultant de cette duplication séparément par l'intermédiaire de la voie active (AP) et par l'intermédiaire de la voie détournée (EP) à un dispositif de synchronisation central (AS) qui est associé au dispositif de connexion (CCb) se trouvant à la fin de la paire de voies et qui est attribué temporairement au chemin virtuel ou à la liaison virtuelle,
à partir de ce dispositif de synchronisation central (AS), d'une part on retransmet d'abord par l'intermédiaire du dispositif de connexion (CCb) associé simplement le flux de cellules d'informations envoyé par l'intermédiaire de la voie active (AP) et d'autre part on synchronise les deux flux de cellules d'informations envoyés,
lorsqu'une synchronisation de ce genre est obtenue, on retransmet au moyen du dispositif de synchronisation central (AS) d'abord par l'intermédiaire du dispositif de connexion associé (CCb) à la place du flux de cellules d'informations envoyé par l'intermédiaire de la voie active (AP) le flux de cellules d'informations envoyé par l'intermédiaire de la voie détournée (EP)
et on sort ensuite le dispositif de synchronisation central (AS) hors de la voie de transmission pour le flux de cellules d'informations envoyé par l'intermédiaire de la voie détournée (EP).

2. Procédé selon la revendication 1,
**caractérisé par le fait qu'**on fixe et établit la voie détournée (EP) seulement suite au signal de demande.

3. Procédé selon la revendication 1,
**caractérisé par le fait qu'**on fixe déjà conjointement à la voie active (AP) la voie détournée (EP) et la capacité de transmission nécessaire à cet effet mais qu'on effectue la transmission du flux de cellules d'informations avant l'apparition du signal de demande exclusivement par l'intermédiaire de la voie active (AP).

4. Procédé selon la revendication 1,
**caractérisé par le fait qu'**on fixe conjointement à la voie active (AP) simplement le parcours de la voie détournée (EP) mais qu'on demande la capacité de transmission nécessaire à cette voie détournée seulement suite au signal de demande.

5. Procédé selon la revendication 3 ou 4,
**caractérisé par le fait que**, avant l'apparition du signal de demande, on utilise la capacité de transmission nécessaire à la voie détournée (EP) pour un trafic d'informations moins prioritaire.

6. Procédé selon la revendication 1,
**caractérisé par le fait que**
celui-ci est modifié de telle sorte qu'on duplique constamment au moyen du dispositif de connexion (CCa) se trouvant au début de la paire de voies le flux de cellules d'informations envoyé à celui-ci et on envoie les deux flux de cellules d'informations résultants séparément par l'intermédiaire de la voie active (AP) et par l'intermédiaire de la voie détournée (EP) au dispositif de synchronisation central (AS) par l'intermédiaire du dispositif de connexion (CCb) se trouvant à la fin de la paire de voies,
au moyen de ce dispositif de synchronisation central (AS), d'une part on retransmet par l'intermédiaire du dispositif de connexion associé (CCb) simplement le flux de cellules d'informations envoyé par l'intermédiaire de la voie active et d'autre part on synchronise constamment les deux flux de cellules d'informations envoyés
et, lors de la panne de la voie active, on retransmet le flux de cellules d'informations arrivant par l'intermédiaire de la voie détournée.

7. Procédé selon l'une des revendications 1 à 6,
**caractérisé par le fait que**
une cellule de commande est insérée, à chaque fois à des intervalles de temps fixés, dans les deux flux de cellules d'informations envoyés au dispositif de synchronisation central (AS),
un numéro d'ordre changeant en continu de cellule de commande en cellule de commande est contenu à chaque fois dans les cellules de commande,
et, au moyen du dispositif de synchronisation central (AS), on effectue selon les numéros d'ordre arrivant dans les cellules de commande des deux flux de cellules d'informations une synchronisation des deux flux de cellules d'informations en vue de la compensation des différences de temps de propagation conditionnées par la voie active et par la voie détournée.

8. Procédé selon la revendication 7,
**caractérisé par le fait que**, au moyen du dispositif de synchronisation central (AS), on effectue pas à pas la compensation des différences de temps de propagation.

9. Réseau de communication avec cellules (ATMN) comportant un circuit pour dévier un flux de cellules d'informations, transmis dans un chemin virtuel ou au cours d'une liaison virtuelle par l'intermédiaire d'une voie active (AP), sur une voie détournée (EP) et comportant une multiplicité de dispositifs de connexion,
dans lequel la voie détournée (EP) forme conjointement avec la voie active une paire de voies virtuelle,
dans lequel un dispositif de connexion (CCa) se trouvant au début de la paire de voies peut être configuré de telle sorte que le flux de cellules d'informations, envoyé à celui-ci, du chemin virtuel considéré ou de la liaison virtuelle considérée est dupliqué suite à un signal de demande et les deux flux de cellules d'informations résultants sont envoyés séparément par l'intermédiaire de la voie active (AP) et par l'intermédiaire de la voie détournée (EP) à un dispositif de connexion (CCb) se trouvant à la fin de la paire de voies,
**caractérisé par le fait que**
le circuit comporte un dispositif de synchronisation central (AS) qui est associé au dispositif de connexion (CCb) se trouvant à la fin de la paire de voies et qui reçoit les deux flux de cellules d'informations, les deux flux de cellules d'informations pouvant être envoyés temporairement au dispositif de synchronisation central (AS) par l'intermédiaire du dispositif de connexion associé (CCb) et le dispositif de synchronisation central (AS) étant conçu de telle sorte que
d'une part il peut renvoyer d'abord seulement le flux de cellules d'informations envoyé par la voie active (AP) au dispositif de connexion (CCb) pour une retransmission et d'autre part les deux flux de cellules d'informations envoyés peuvent être synchronisés et, une fois la synchronisation effectuée, le flux de cellules d'informations envoyé par l'intermédiaire de la voie détournée (EP) peut être maintenant renvoyé au dispositif de connexion associé (CCb) à la place du flux de cellules d'informations envoyé par l'intermédiaire de la voie active (AP)
et le dispositif de synchronisation central (AS) peut ensuite être sorti par le dispositif de connexion associé (CCb) hors de la transmission du flux de cellules d'informations envoyé par l'intermédiaire de la voie détournée (EP).

10. Réseau de communication avec cellules selon la revendication 9,
**caractérisé par le fait qu'**il est prévu une multiplicité de dispositifs de synchronisation centraux qui peuvent être associés à chaque fois individuellement à un chemin virtuel à dévier ou à une liaison virtuelle à dévier.

11. Réseau de communication avec cellules selon la revendication 9 ou 10,
**caractérisé par le fait que** le dispositif de synchronisation central (AS) respectif est raccordé côté entrée à une connexion de conducteur de sortie (T4) et côté sortie à une connexion de conducteur d'entrée du dispositif de connexion associé (CCb).
